Europäisches Patentamt

European Patent Office

Office européen des brevets

(11) Publication number: **0 406 467 A1**

# EUROPEAN PATENT APPLICATION

(21) Application number: 89112289.7

(22) Date of filing: 05.07.89

(51) Int. Cl.5 **H01M 4/20**

(43) Date of publication of application:
09.01.91 Bulletin 91/02

(84) Designated Contracting States:
AT BE CH DE ES FR GB GR IT LI LU NL SE

(71) Applicant: **NESTE OY**
**Keilaniemi**
**SF-02150 Espoo(FI)**

(72) Inventor: **Kärnä, Toivo**
**Kuskintie 3**
**SF-06400 Porvoo(FI)**
Inventor: **Fredenberg, Frey**
**Mustion Ruukki**
**SF-10360 Mustio(FI)**
Inventor: **Niemi, Timo**
**Myllytuvantie 2 as 18**
**SF-40630 Jyväskylä(FI)**
Inventor: **Luukka, Matti**
**Koivukuja 3**
**SF-51200 Kangasniemi(FI)**
Inventor: **Nieminen, Jukka-Pekka**
**Viertokuja 1 G 27**
**SF-06400 Porvoo(FI)**

(74) Representative: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**D-8000 München 2(DE)**

(54) Procedure and means for manufacturing storage battery plates.

(57) The present invention concerns a procedure for manufacturing storage plates. In the procedure the plate frames (5) of storage batteries are material-coated with an active material supply means (10) which is provided with at least one rotating material application wheel (11,11a) including a dispensing member (14) with which the active material is disposed to a conveyor belt or equivalent means which travels under the supply means (10) and conveys plate frames (5). The material application wheel/wheels (11,1a) of said supply means (10) is rotated at such a high speed that the material application wheel/wheels (11,1a) disposes/dispose the active material (1) fed to said dispensing member (14) to the mobile conveyor belt (20) under the effect of centrifugal force. The invention also concerns a means for manufacturing storage batteries.

EP 0 406 467 A1

# FIG. 2

## PROCEDURE AND MEANS FOR MANUFACTURING STORAGE BATTERY PLATES

The present invention concerns a procedure for manufacturing storage batteries in which procedure the plate frame of said storage battery plates is compound-applied with an active material applying means provided with at least one rotating compound application wheel provided with dispensing members, with which the active material is dispensed on a conveyor belt or equivalent travelling under the application means and conveying said to the plate frame.

The invention also concerns a means for manufacturing storage battery plates, said means comprising an active material application means arranged to be located above the conveyor belt or equivalent conveying the plate frames for storage battery plates, said means being provided with at least one rotary compound applying wheel provided with dispensing members, said wheel being arranged when rotating to dispense the active material on the conveyor belt travelling thereunder.

The storage battery plates are in general so manufactured that on a plate blank placed on a conveying base, e.g. on a belt, is applied active material, which e.g. in a lead battery consists of lead oxide, water, sulphuric acid and requisite additives. For the lead battery, the plate frame has been formed of lead wire reticle. The active material is compressed on the plate frame and it is smoothed thereafter e.g. with the aid of rollers or equivalent, whereafter the storage battery plate is detached from the conveying base in an appropriate manner.

The active material is in nature clay-like and sticky, which causes considerable problems in applying said com pound on the plate frame. A means for applying the active compound is known in the art in which lead wire nets, that is, the plate frames have been placed on a mobile conveyor belt which moves the plate frames past the active compound applying head. In said designs known in the art, a silo or equivalent has been disposed in said head applying the active compound, from which a rotary blade wheel and an application roller thereunder applies the active compound on the plate frame passing under the silo. However, with said design of prior art are related numerous drawbacks. A considerable drawback is that the dispensing with the blade wheel and the application roller is inaccurate because with the application roller it is not possible to dispense an appropriate layer of said compound on a plate frame passing on the conveyor belt with sufficient accuracy. When passing under the silo, the plate frame has to "tear" the requisite layer of compound in place. This kind of design known of prior art requires considerable and time-consuming subsequent cleaning of the storage battery plates as well as calibration of the completed storage battery plates to provide sufficiently homogeneous plates. The mechanical strength of the plate frame is also required to be very high.

The object of the present invention is to provide a procedure and a means with which the disadvantage related to the state of art are avoided and with which an essential improvement with reference to said designs is achieved. For implementing said aim, the procedure of the invention is characterized in that the compound applying wheel/wheels of the supply means is/are rotated at a speed which is so high that the compound application wheel/wheels dispendes/dispense the active material fed to said dispensing member on the mobile conveyor belt under the effect of centrifugal force.

The means of the invention is in turn characterized in that the active material supply means is provided with an active material prefeeder for supplying said active material into said dispensing member when the compound application wheel is rotating, and that the compound appliccation wheel has been arranged to rotate at a speed that the active material is detached from the dispensing member of the compound application wheel to the conveyor belt under the effect of centrifugal force.

Of the advantages achievable with the invention may be introduced e.g. the following. Using the procedure and the means of the invention, the active compound can be dispensed very accurately, because of which thinner and lighter plate frames than earlier can be used. Due to the dispensing accuracy, the trimming of the active material in the transversal direction of said storage battery plates is easy to carry out, whereby the aftercleaning of the storage battery plates is essentially lesser than in the designs known in the art. Using the procedure and the means of the invention, the active compound can be dispensed either in the form of continuous or intermittent band on a conveyor belt or equivalent means which travels under the active material supply means. Said active material can be dispensed either directly on the belt or on the plate frames travelling on said belt.

The other advantages and characteristic features of the invention become obvious from the detailed description of the invention following below.

The invention is described in the following in detail referring to the figures of the drawing enclosed.

Fig. 1 presents schematically in elevational view an apparatus for producing storage battery plates.

Fig. 2 presents schematically in partial sectional image viewed in parallel the supply means of the active material.

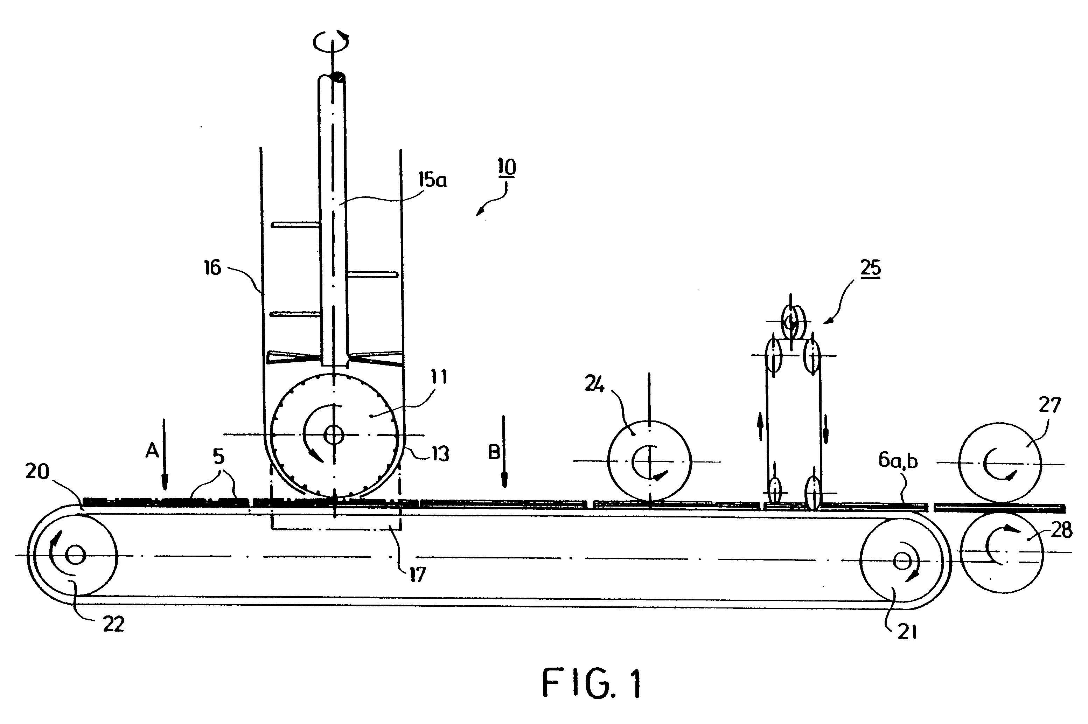

In Fig. 1, the supply means of the active material is in general indicated by reference numeral 10. Said supply means 10 of the active material comprises a compound application wheel 11 which is arranged to rotate in a material application wheel housing 13. Above said material application wheel 11 is disposed a prefeeder 15a in a housing 16, which in Fig. 1 is a screw dispenser. The prefeeder 15a feeds the active compound to the material application wheel 11 which in turn dispenses said active compound to a conveyor belt 20 travelling under the supply means 10. The conveyor belt 20 is an unending belt which is arranged to travel above the deflection sheaves 21 and 22, one of said deflection sheaves being advantageously arranged to be driving.

In the arrangement of the invention, the plate frames 5 may be fed to the conveyor belt 20 alternatively either before the active material supply means 10 at point A or after the supply means at point B. If the plate frames 5 are fed to the conveyor belt 20 before the supply means 10 at point A, the material application wheel dispenses the active material directly on said plate frames 5. If the plate frames 5 are delivered to the conveyor belt 20 after the supply means 10 at point B, said supply means 10 dispenses said material directly on the conveyor belt 20, whereby the plate frames 5 are placed on top of the compound layer. When using the latter alternative, the plate frames 5 have to be pressed into the compound, which is performed with a rotary press roller 24 arranged to be located after the dispensing point B. When using the first alternative, that is, when the plate frames 5 are delivered before the active material supply means 10 at point A, the press roller 24 is not necessarily needed.

After the plate frames 5 have been compound-applied, the storage battery plates 6a,6b are detached from the conveyor belt 20 e.g. with the aid of a wire-type detaching means 25 shown in Fig. 1. Said detaching means 25 is required because the active compound is extremely sticky and clay-like, and adheres very easily to the conveyor belt 20. After detaching the storage battery plates 6a,6b, the cleaning thereof, if needed, is carried out e.g. with the aid of pressurized air. Finally, the calibration of the finished battery storage plates 6a,6b is performed with the aid of calibration rollers 27 and 28 to the desired thickness.

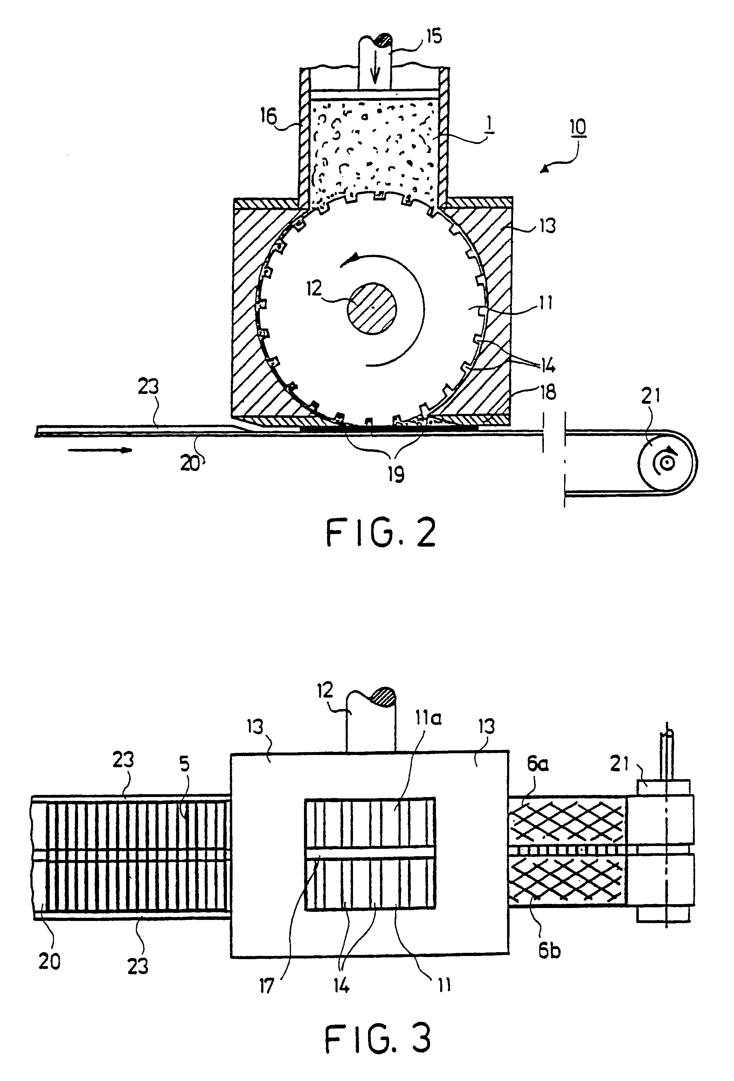

In Figs. 2 and 3, the structure and functioning of the active material supply means 10 is presented more closely. As is already mentioned above, the supply means 10 comprises at least one material application wheel 11,11a, fitted to rotate in a wheel housing 13. The material application wheels 11,11a have been mounted on a shaft 12 with which said wheels are driven On the surface of said material application wheels have been arranged recesses 14, mainly in axial direction, said recesses being disposed on the wheel periphery at equal intervals in the direction of the periphery. Above the compound appliccation wheel 11 is arranged a prefeeder 15 into a housing 16, said feeder pressing the active material 1 in the housing 16 into the recesses 14 in the material application wheel 11. Deviating from the embodiment of Fig. 1, the prefeeder 15 presented in Fig. 2 is a press dispenser in which a piston presses the active material 1 into the recesses 14 of the material application wheel.

The material application wheel 11 is rotated at high speed, e.g. of the order of magnitude 1000 rpm, and therefore the compound 1 tends to be detached from the recesses 14 located on the outer surface of said wheel. However, because the material application wheel 11 is on one hand surrounded by the active material 1, and on the other, by the wheel housing 13, the active material 1 may be detached from the wheel 11 only through an aperture 19 made on the under surface of the supply means 10, wherethrough said material application wheel 11 dispenses active material either directly on the conveyor belt 20 or on the plate frames 5 of the conveyor belt. The thickness of the compound layer introduced on the conveyor belt 20 or on the plate frames 5 can be regulated by adjusting the distance of the supply means 10 from the conveyor belt 20, and alternatively, by changing the speed of rotation of the material application wheel or wheels. In addition, on the trailing edge of the supply means 10 has been provided a smoothing plane 18 which smooths the upper surface of the compound layer dosed on the conveyor belt 20.

It is described above that recesses 14 serving as dispensing member have been formed on the surface of the material application wheels 11,11a. A dispensing member may be formed on the material application wheel/wheels 11,11a also in another manner; examples of such may be mentioned ridges, grooves, peaks, bristles or equivalent formed on the material application wheel/wheels 11,11a.

As is prevented in Fig. 3, by using the procedure and the means of the invention it is possible to perform also the so-called material application of bipolar storage battery plates. The bipolar storage plates are such in which on the same plate frame are fitted both the so-called plus and minus compounds which are in separation from one another. For the material application of bipolar storage plates are arranged two material application wheels 11 and 11a on the same plate frame, separated by a partition from each other. Respectively, above this kind of supply means have also been arranged two prefeeders respectively separated by a wall. In the embodiment of Fig. 3, two parallel material application bands, with a gap therebetween, are in this manner disposed on the conveyor belt. If needed, the cleanliness of said gap after applying the compound is secured e.g. with the aid of the above described pressurized air blow. In addition, it is depicted in Figs 2 and 3 that before the dispensing means 10 side guides 23 are fitted on the conveyor belt 20 to secure that the plate frames 5 enter the dispensing means 10 in a right position.

As is already described above, the plate frames 5 can be delivered to the conveyor belt 20 either before the dispensing means 10 at point A or thereafter at point B. If the plate frames are delivered to the conveyor belt 20 before the dispensing means 10, the active material is dispensed directly on the plate frames 5. Hereby, a given amount of stress is directed at the plate frames 5 from the supplu means 10, but it has been found in the tests which have been accomplished that the plate frames with about 1.2 mm wire thickness tolerate the stress caused by the supply means 10. However, using the procedure and the means of the invention, the material application may be accomplished also on thinner plate frames. In the present instance, the plate frames 5 have to be delivered to the conveyor belt 20 after the supply means 10 at point B, whereby the plate frames 5 are brought straight to the conveyor belt 20 on top of the dispensed active material. Hereby, the plate frames 5 have to be pressed into the active compound with the press roller 24 as is described above.

The invention is described in the foregoing referring to the figures presented in the drawing attached. Therewith, the invention is not intended to be confined to concern exclusively the example shown in the figures, and a plu rality of modifications are feasible within the scope of the inventive idea determined in the claims attached below.

The present invention concerns a procedure for manufacturing storage plates. In the procedure the plate frames (5) of storage batteries are material-coated with an active material supply means (10) which is provided with at least one rotating material application wheel (11,11a) including a dispensing member (14) with which the active material is disposed to a conveyor belt or equivalent means which travels under the supply means (10) and conveys plate frames (5). The material application wheel/wheels (11,1a) of said supply means (10) is rotated at such a high speed that the material application wheel/wheels (11,1a) disposes/dispose the active material (1) fed to said dispensing member (14) to the mobile conveyor belt (20) under the effect of centrifugal force. The invention also concerns a means for manufacturing storage batteries.

## Claims

1. A procedure for manufacturing storage batteries, in which procedure the plate frames (5) of storage batteries are material-coated with an active material supply means (10) which is provided with at least one rotating material application wheel (11,11a) including a dispensing member (14) with which the active material is dispensed to a conveyor belt (20) or equivalent means travelling below the supply means (10) and conveying the plate frames (5), characterized in that the material application wheel/wheels (11,11a) of the supply means (10) is/are rotated at so high speed that the material application wheel/wheels (11,11a) dispense the active material (1) fed to said dispensing member (14) to the mobile conveyor belt (20) under the effect of centrifugal force.

2. Procedure according to claim 1, characterized in that the active material (1) is supplied into the dispensing member (14) of the material application wheel (11,11a) by pressing with a prefeeder (15,15a).

3. Procedure according to claim 1 or 2, characterized in that the plate frames (5) are delivered to the conveyor belt (20) or equivalent before the active material supply means (10) so that said supply means (10) dispenses the active compound (1) directly on the plate frames (5).

4. Procedure according to claim 1 or 2, characterized in that the plate frames (5) are delivered to the conveyor belt (20) after the supply means (10) on top of the active material (1) dispensed on top of said conveyor belt (20), whereafter the plate frames (5) are pressed into said active material.

5. Procedure according to any one of the preceding claims, characterized in that the thickness of the material layer supplied on the conveyor belt (20) is adjjusted by adjusting the distance of the supply means (10) from the conveyor belt (20).

6. Procedure according to any one of the preceding claims, characterized in that the thickness of the material layer supplied on the conveyor belt (20) is adjusted by adjusting the speed of rotation of the material application wheel/wheels (11,11a).

7. A means for producing storage plates, said means comprising a supply means (10) for the active material arranged to be located above the conveyor belt (20) or equivalent conveying the plate frames (5) of storage battery plates, said supply means being provided with at least one rotating material application wheel (11,11a) and provided with dispensing members (14) which, when rotating, is arranged to dispense the active material to a conveyor belt (20) travelling thereunder, characterized in that the active material supply means (10) is provided with an active material prefeeder (15,15a) for dispensing active material (1) into said dispensing member (14) while said material application wheel (11,11a) rotates, and that said material application wheel (11,11a) is disposed to rotate at a speed that the active material (1) is detached from the disposing member (14) of the material application wheel (11,11a) to the conveyor belt (20) under the effect of centrifugal force.

8. Means according to claim 7, characterized in that the disposing member (14) includes recesses (14), ridges, grooves, peaks, bristles or equivalent, formed on the periphery of the material application wheel (11,11a).

9. Means according to claim 7 or 8, characterized in that the active material supply means (10) comprises at least two material application wheels (11,11a) arranged to rotate in parallel, said wheels being separated by a partition (17) for dispensing active material to the conveyor belt (20) in two parallel strips.

10. Means according to claim 9, characterized in that each material application wheel (11,11a) is provided with an individual, separate prefeeder (15,15a).

11. Means according to any one of claims 7-10, characterized in that the distance of the supply means (10) from the conveyor belt (20) is arranged to be adjustable for providing an appropriate thickness in the material layer on the conveyor belt (20).

12. Means according to any one of claims 7-11, characterized in that in the material application wheel (11,11a) the speed of rotation is arranged to be adjustable.

FIG. 1

EP 0 406 467 A1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 151 392  (WIRTZ) <br> * Page 5, lines 38-60; page 5, lines 72-83; figures 4,10 * <br> --- | 1,3,6,7 ,12 | H 01 M   4/20 |
| A | PATENT ABSTRACTS OF JAPAN, vol. 10, no. 24 (E-377)[2081], 30th January 1986; & JP-A-60 182 659 (SHINKOUBE DENKI K.K.) <br> * Whole abstract * <br> --- | 1,3,6 | |
| A | US-A-2 680 547  (G.A. DONATH) <br> * Column 7, lines 17-25 * <br> --- | 1 | |
| A | FR-A- 689 919  (E. PARVILLE) <br> ----- | | |

TECHNICAL FIELDS SEARCHED (Int. Cl.5)

H 01 M   4

The present search report has been drawn up for all claims

| Place of search | Date of completion of the search | Examiner |
|---|---|---|
| THE HAGUE | 02-03-1990 | GROSEILLER PH.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)